(19) Europäisches Patentamt European Patent Office Office européen des brevets

(11) **EP 4 665 026 A1**

(12) **EUROPEAN PATENT APPLICATION**
published in accordance with Art. 153(4) EPC

(43) Date of publication:
**17.12.2025 Bulletin 2025/51**

(21) Application number: **23920377.1**

(22) Date of filing: **08.02.2023**

(51) International Patent Classification (IPC):
**H04W 68/02** (2009.01)    **H04W 52/02** (2009.01)

(52) Cooperative Patent Classification (CPC):
**H04W 52/02; H04W 68/02**

(86) International application number:
**PCT/CN2023/074935**

(87) International publication number:
**WO 2024/164168 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Weijie**
**Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD, AND DEVICE**

(57)    Embodiments of the present disclosure provides a method for wireless communication and an apparatus, which can enable paging for ambient internet of things (IoT) devices. The method for wireless communication includes receiving, by a first communication device, a paging message. Optionally, the first communication device is an ambient IoT device or a zero-power device.

FIG. 11

## EP 4 665 026 A1

**Description**

TECHNICAL FIELD

Embodiments of the present disclosure relates to the field of communications, and in particularly, to a method for wireless communication and a device.

BACKGROUND

In the internet of things (IoT) (e.g., cellular passive IoT or wireless local area networks (WLAN) passive IoT), ambient IoT devices may be supported, so as to fulfill corresponding types of IoT communication requirements in different application scenarios. In view of service characteristics of the ambient IoT device, limitations on capabilities of the ambient IoT device, and constraints on operating power of the ambient IoT device, a conventional paging scheme cannot satisfy paging requirements for the ambient IoT device. How to realize paging for the ambient IoT device is a problem that needs to be addressed.

SUMMARY

Embodiments of the present disclosure provide a method for wireless communication and a device, which can realize paging for ambient internet of things (IoT) devices.

In a first aspect, a method for wireless communication is provided. The method includes receiving, by a first communication device, a paging message.

Optionally, the first communication device is an ambient IoT device, or the first communication device is a zero-power device.

In a second aspect, a method for wireless communication is provided. The method includes sending, by a second communication device, a paging message for a first communication device.

Optionally, the first communication device is an ambient IoT device, or the first communication device is a zero-power device; and/or, the second communication device is a network device, or an access point (AP), or a terminal device, or a relay device.

In a third aspect, a communication device is provided, where the communication device is a first communication device and is configured to perform the method described in the first aspect. Specifically, the communication device includes a functional module(s) configured to execute the method described in the first aspect.

In a fourth aspect, a communication device is provided, where the communication device is a second communication device and is configured to perform the method described in the second aspect. Specifically, the communication device includes a functional module(s) configured to execute the method described in the second aspect.

In a fifth aspect, a communication device is provided, where the communication device is a first communication device and includes a processor and a memory, where the memory is configured to store a computer program, and the processor is configured to call and run the computer program stored in the memory, such that the communication device performs the method described in the first aspect.

In a sixth aspect, a communication device is provided, where the communication device is a second communication device and includes a processor and a memory, where the memory is configured to store a computer program, and the processor is configured to call and run the computer program stored in the memory, such that the communication device performs the method described in the second aspect.

In a seventh aspect, an apparatus is provided, which is configured to implement any one of the methods described in the first aspect or the second aspect.

Specifically, the apparatus includes a processor configured to call and run a computer program from a memory, such that a device equipped with the apparatus performs any one of the methods described in the first or second aspect.

In an eighth aspect, a computer-readable storage medium is provided, which is configured to store a computer program, where the computer program causes a computer to perform any one of the methods described in the first or second aspect.

In a ninth aspect, a computer program product is provided, which includes computer program instructions, where the computer program instructions cause a computer to perform any one of the methods described in the first or second aspect.

In a tenth aspect, a computer program is provided, which, when run on a computer, causes the computer to perform any one of the methods described in the first or second aspect.

By means of the above technical solutions, paging for the first communication device, such as an ambient IoT device or a zero-power device, can be realized.

BRIEF DESCRIPTION OF THE DRAWINGS

FIG. 1 is a schematic diagram of a communication system architecture to which embodiments of the present disclosure are applicable.

FIG. 2 is a schematic diagram of zero-power communication provided by the present disclosure.

FIG. 3 is a schematic diagram of backscattering communication provided by the present disclosure.

FIG. 4 is a schematic diagram of energy harvesting provided by the present disclosure.

FIG. 5 is a circuit diagram of resistive load modulation provided by the present disclosure.

FIG. 6 is a schematic diagram of non-return-to-zero (NRZ) coding provided by the present disclosure.

FIG. 7 is a schematic diagram of Manchester coding provided by the present disclosure.

FIG. 8 is a schematic diagram of unipolar return-to-zero (RZ) coding provided by the present disclosure.

FIG. 9 is a schematic diagram of differential bi-phase (DBP) coding provided by the present disclosure.

FIG. 10 is a schematic diagram of Miller coding provided by the present disclosure.

FIG. 11 is a schematic flow chart of a method for wireless communication according to embodiments of the present disclosure.

FIG. 12 is a schematic diagram illustrating a synchronization signal (SS), a control channel, and a paging channel according to embodiments of the present disclosure.

FIG. 13 is a schematic diagram illustrating target paging occasions (POs) according to embodiments of the present disclosure.

FIG. 14 is a schematic diagram illustrating target paging windows according to embodiments of the present disclosure.

FIG. 15 is a schematic diagram illustrating POs according to embodiments of the present disclosure.

FIG. 16 is a schematic diagram illustrating Mode 1, Mode 2, and Mode 3 according to embodiments of the present disclosure.

FIG. 17 is a schematic diagram illustrating information fields in a device identifier (ID) according to embodiments of the present disclosure.

FIG. 18 is a schematic block diagram of a communication device according to embodiments of the present disclosure.

FIG. 19 is a schematic block diagram of another communication device according to embodiments of the present disclosure.

FIG. 20 is a schematic block diagram of yet another communication device according to embodiments of the present disclosure.

FIG. 21 is a schematic block diagram of an apparatus according to embodiments of the present disclosure.

FIG. 22 is a schematic block diagram of a communication system according to embodiments of the present disclosure.

DETAILED DESCRIPTION

The following will describe technical solutions of embodiments of the present disclosure with reference to the accompanying drawings in embodiments of the present disclosure. Apparently, the embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (WiFi), a $5^{th}$-generation (5G) communication system, a $6^{th}$-generation (6G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, sidelink communication, vehicle to everything (V2X) communication, etc. Embodiments of the present disclosure can also be applied to these communication systems.

Optionally, the communication system in embodiments of the present disclosure may be applied to a carrier aggregation (CA) scenario, or may be applied to a dual connectivity (DC) scenario, or may be applied to a standalone (SA) scenario.

Optionally, the communication system in embodiments of the present disclosure is applicable to an unlicensed spectrum, and an unlicensed spectrum may be regarded as a shared spectrum. Alternatively, the communication system in embodiments of the present disclosure is applicable to a licensed spectrum, and a licensed spectrum may be regarded as a non-shared spectrum.

In some embodiments, the communication system in embodiments of the present disclosure may be applicable to frequency range 1 (FR1) (corresponding to a frequency range of 410 Megahertz (MHz) to 7.125 Gigahertz (GHz), FR2 (corresponding to a frequency range of 24.25 GHz to 52.6 GHz), as well as new frequency ranges, such as high-frequency bands corresponding to a frequency range of 52.6 GHz to 71 GHz or a frequency range of 71 GHz to 114.25 GHz.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, a vehicle-mounted communication device, a wireless communication chip/application specific integrated circuit (ASIC)/system on chip (SoC).

By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the present disclosure, the network device may be mobile. For example, the network device may be a mobile device. In some embodiments, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may also be a base station deployed on land or water.

In embodiments of the present disclosure, the network device can serve a cell, and the terminal device can communicate with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

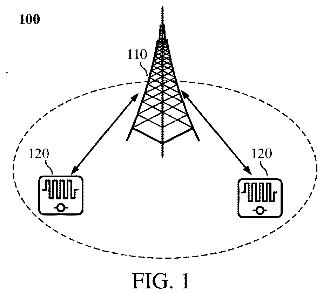

Exemplarily, FIG. 1 illustrates a communication system 100 to which embodiments of the present disclosure are applicable. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there may be other quantities of terminal devices in a coverage area of each of the network devices. Embodiments of the present disclosure are not limited in this regard.

In some embodiments, the communication system 100 may further include other network entities such as a network controller, a mobility management entity (MME), or the like, and embodiments of the present disclosure are not limited in this regard.

It may be understood that, in embodiments of the present disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 may be the devices described above and will not be elaborated again herein. The communication device may further include other devices such as a network controller, an MME, or other network entities in the communication system 100, and embodiments of the present disclosure are not limited in this regard.

It may be understood that, the terms "system" and "network" herein are usually used interchangeably throughout this disclosure. The term "and/or" herein only describes an association relationship between associated objects, which means that there may be three relationships. For example, $A$ and/or $B$ may mean $A$ alone, both $A$ and $B$ exist, and $B$ alone. In addition, the character "/" herein generally indicates that the associated objects are in an "or" relationship.

Terms used in the embodiments of the present disclosure are merely intended for explaining embodiments of the present disclosure rather than limiting the present disclosure. The terms "first", "second", "third", "fourth", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion.

It may be understood that, "indication" referred to in embodiments of the present disclosure may be a direct indication, may be an indirect indication, or may mean that there is an association relationship. For example, $A$ indicates $B$ may mean that $A$ directly indicates $B$, for instance, $B$ can be obtained according to $A$; may mean that $A$ indirectly indicates $B$, for instance, $A$ indicates $C$, and $B$ can be obtained according to $C$; or may mean that that there is an association relationship between $A$ and $B$.

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the present disclosure, the "pre-defined" or "pre-configured" may be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, a Wi-Fi protocol, or an evolution of a protocol related to other communication systems, and the protocol type is not limited in the present disclosure.

To facilitate better understanding of the embodiments of the present disclosure, the zero-power communication technology involved in the present disclosure is described below.

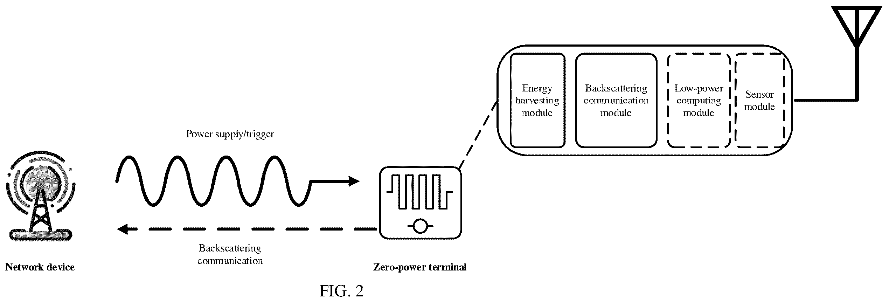

Zero-power communication adopts energy (power) harvesting and backscattering communication technologies. A zero-power communication network is composed of a network device and a zero-power device(s), as illustrated in FIG. 2. The network device is configured to transmit wireless power supply signals and downlink communication signals to the zero-power device, and to receive backscattering signals from the zero-power device. A basic zero-power device includes an energy harvesting module, a backscattering communication module, and a low-power computing module. In addition, the zero-power device may further include a memory or a sensor for storing basic information (e.g., item identification, etc.) or acquiring sensor data such as ambient temperature and humidity.

Key technologies of zero-power communication primarily include radio frequency (RF) energy harvesting and backscattering communication.

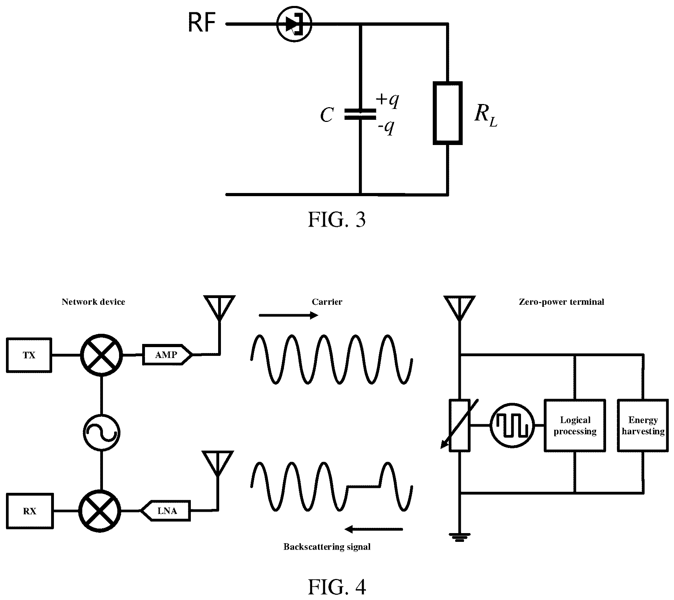

Specifically, RF energy harvesting may be implemented as illustrated in FIG. 3. An RF energy harvesting module is configured to collect enery from electromagnetic waves in space based on the principle of electromagnetic induction, thereby obtaining the enery required to power the zero-power device, such as for driving a low-power demodulation and modulation module(s), a sensor(s), memory access, and the like. As such, the zero-power device does not require a traditional battery.

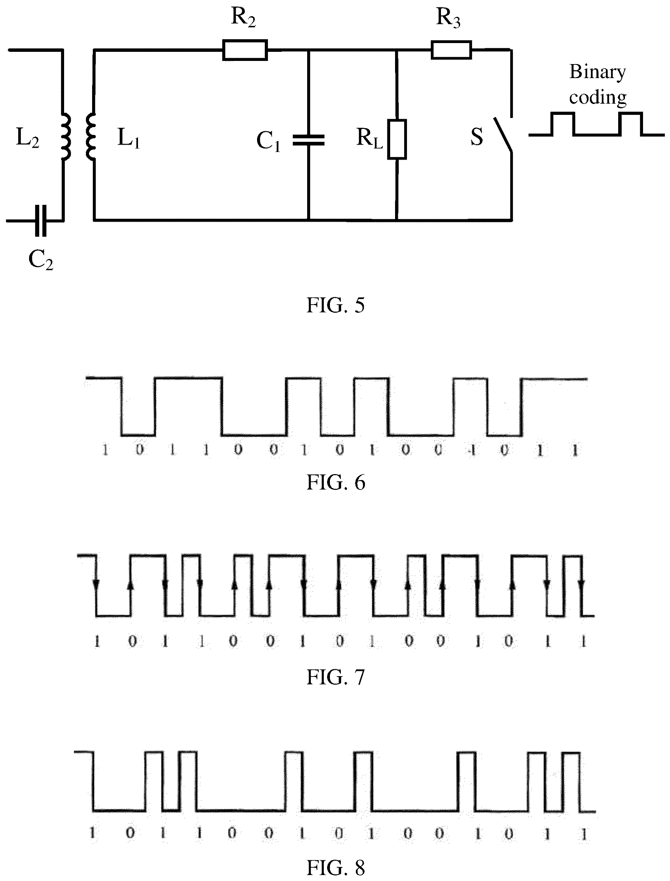

Specifically, backscattering communication may be implemented as illustrated in FIG. 4. The zero-power communication terminal receives a wireless signal transmitted by the network and modulates the signal to embed the information to be transmitted, and then radiates the modulated signal via an antenna(s). This information transmission process is referred to as backscattering communication. Backscattering communication is closely related to load modulation. Load modulation means adjustment and control of circuit parameters of an oscillating loop in the zero-power device based on the rhythm of a data stream, thereby changing parameters such as an impedance of an electronic tag to achieve modulation. Load modulation mainly include resistive load modulation and capacitive load modulation. In resistive load modulation, a resistor is connected in parallel with a load and is switched on or off under the control of a binary data stream, as illustrated in FIG. 5. The on/off switching of the resistor may cause a voltage change in the circuit, thereby achieving amplitude shift keying (ASK) modulation, i.e., achieving signal modulation and transmission by adjusting the amplitude of the backscattering signal of the zero-power device. Similarly, in capacitive load modulation, the circuit's resonant frequency can be changed by switching a capacitor on or off, thereby achieving frequency shift keying (FSK) modulation, i.e., achieving signal modulation and transmission by adjusting the operating frequency of the backscattering signal of the zero-power device.

It may be seen that, the zero-power device performs information modulation on an incident signal via load modulation to achieve backscattering communication. As a result, the zero-power device offers the following significant advantages:

(1) The zero-power device does not actively transmit signals, and thus does not require a complex RF chain, such as a power amplifier (PA), a RF filter, etc.;
(2) The zero-power device does not need to actively generate high-frequency signals, and thus does not require a high-frequency crystal oscillator;
(3) With the help of backscattering communication, the zero-power device does not consume its own power for signal transmission.

Owing to its advantages such as ultra-low cost, zero-power consumption, and small size, zero-power communication can be widely applied across various industries, such as logistics, intelligent warehousing, smart agriculture, energy and power, and industrial Internet in vertical sectors; and in personal applications such as smart wearables and smart homes.

To facilitate better understanding of the embodiments of the present disclosure, coding schemes for zero-power communication involved in the present disclosure are described below.

For data to be transmitted by an electronic tag, various types of codes may be used to represent binary "1" and "0". Radio frequency identification (RFID) systems typically use one of the following coding schemes: non-return-to-zero (NRZ) coding, Manchester coding, unipolar return-to-zero (RZ) coding, differential bi-phase (DBP) coding, Miller coding, and differential coding. Simply put, different pulse signals are used to represent binary 0 and 1.

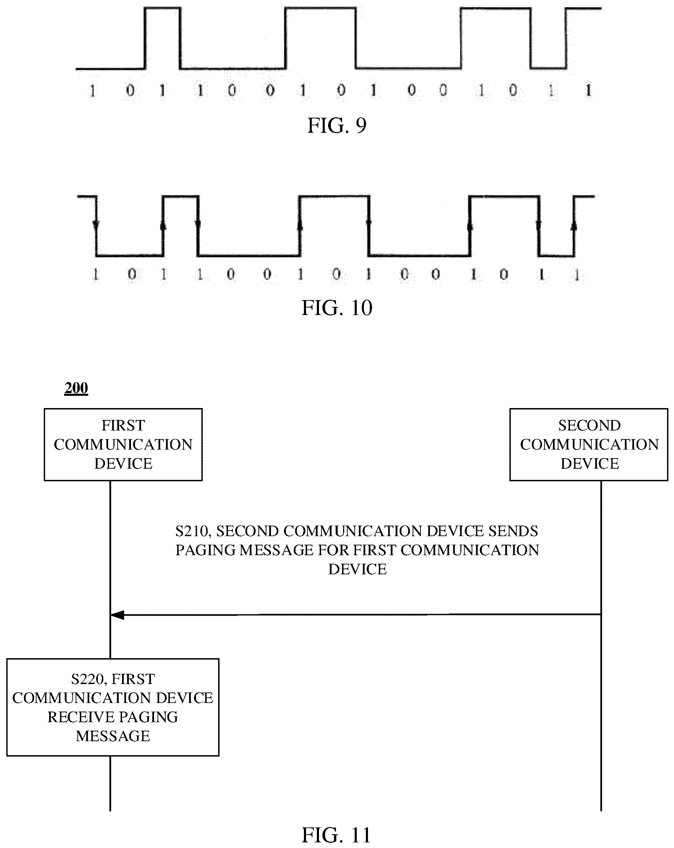

(1) NRZ coding: in NRZ coding, a high level represents binary "1" and a low level represents binary "0," as illustrated in FIG. 6.
(2) Manchester coding: Manchester coding is also known as split-phase coding. In Manchester coding, the value of each bit is represented by a level transition (rising/falling) at the middle of a bit period. A negative transition at the middle of the bit period represents binary "1" and a positive transition at the middle of the bit period represents binary "0", as illustrated in FIG. 7. Manchester coding is typically used for data transmission from an electronic tag to a reader in the case of using carrier-based load modulation or backscattering modulation, as it facilitates error detection in data transmission. This is because a "no transition" state within the bit period is not allowed. In a case where multiple electronic tags transmit bits with different values simultaneously, received rising and falling edges may cancel each other out, resulting in an uninterrupted carrier signal over the entire bit period. As this state is not allowed, the reader can determine the specific location of a collision based on the error.
(3) Unipolar RZ coding: In unipolar RZ coding, a high level in the first half of the bit period represents binary "1," while a constant low level throughout the entire bit period represents binary "0," as illustrated in FIG. 8. Unipolar RZ coding can be used to extract bit synchronization signals.
(4) DBP coding: In DBP coding, any edge in the half of the bit period represents binary "0," while the absence of an edge represents binary "1," as illustrated in FIG. 9. In addition, at the beginning of each bit period, the level is inverted. Therefore, bit timing is relatively easy to be reconstructed for the receiver.
(5) Miller coding: In Miller coding, any edge in the half of the bit period represents binary "1," while a constant level that continues into the next bit period represents binary "0." A level transition occurs at the beginning of the bit period, as illustrated in FIG. 10. Thus, bit timing is relatively easy to be reconstructed for the receiver.
(6) Differential coding: In differential coding, each binary "1" to be transmitted causes a signal level transition, while the signal level remains unchanged for binary "0".

To facilitate better understanding of the embodiments of the present disclosure, the classification of zero-power devices involved in the present disclosure is described below.

Optionally, based on the energy source and usage mode of zero-power devices, zero-power devices may be classified into passive zero-power devices, semi-passive zero-power devices, and active zero-power devices.

1) Passive zero-power device

A zero-power device does not require an internal battery. When the zero-power device is close to a network device (such as a reader of a radio frequency identification (RFID) system), the zero-power device is within the near-field range formed by the radiation of an antenna(s) of the network device. Therefore, an antenna(s) of the zero-power device generates an induced current through electromagnetic induction, and the induced current drives a low-power chip circuit of the zero-power device. This enables the demodulation of a signal on a forward link (downlink, a link from the network device to the zero-power device) and the modulation of a signal on a backward link (uplink, a link from the zero-power device to the network device). For the backscattering link, the zero-power device performs signal transmission using backscattering.

It may be seen that, the passive zero-power device does not require a built-in battery to drive either the forward link or the reverse link, and is thus a truly zero-power device.

The passive zero-power device do not require a battery, and an RF circuit and a baseband circuit therein are very simple, for example, components such as a low-noise amplifier (LNA), a PA, a crystal oscillator, an analog-to-digital conversion (ADC) are not required. Therefore, the passive zero-power device has many advantages, such as small size, light weight, very low cost, and long service life.

2) Semi-passive zero-power device

A semi-passive zero-power device is also not equipped with a conventional battery, but it can use an RF energy harvesting module to collect energy from radio waves, or use a solar/optical/thermal/kinetic energy harvesting module to collect energy, and store the collected energy in an energy storage unit (such as a capacitor). After the energy storage unit obtains energy, the low-power chip circuit of the zero-power device can be driven. This enables the demodulation of a signal on the forward link and the modulation of a signal on the backward link. For the backscattering link, the zero-power device performs signal transmission using backscattering.

It may be seen that, the semi-passive zero-power device does not require a built-in battery to drive either the forward link or the reverse link. Although energy stored in the capacitor is used during operation, the energy originates from the radio energy collected by the energy harvesting module, and therefore, the semi-passive zero-power device is also a truly zero-power device.

The semi-passive zero-power device inherits many advantages of the passive zero-power device, and thus has many advantages such as small size, light weight, very low cost, and long service life.

3) Active zero-power device

In some scenarios, the zero-power device used may also be an active zero-power device. This type of terminal may be equipped with a built-in battery (a conventional battery such as a dry battery, or a rechargeable lithium battery, etc.). The battery is used to drive the low-power chip circuit of the zero-power device. This enables the demodulation of a signal on the forward link and the modulation of a signal of the backward link. However, for the backscattering link, the zero-power device performs signal transmission using backscattering. Therefore, the zero-power feature of such terminals is mainly reflected in that signal transmission on the reverse link does not consume power from the terminal itself but uses backscattering. Although the active zero-power device uses a battery, due to the adoption of ultra-low-power communication technology, power consumption of the active zero-power device is very low. Therefore, compared with existing technologies, the battery life can be significantly improved.

The active zero-power device uses a built-in battery to supply power to an RFID chip, thereby increasing the read/write range of a tag and improving the reliability of communication. Therefore, the active zero-power device can be applied in scenarios with relatively high requirements for communication range, read latency, and so on.

It is well known that, similar to other types of IoT services, the service types of the zero-power IoT are mainly uplink services. Therefore, based on the type of transmitter, zero-power devices may be classified into: zero-power devices based on backscattering; zero-power devices based on an active transmitter; and zero-power devices supporting both backscattering and an active transmitter.

1) Zero-power device based on backscattering

This type of zero-power device transmits uplink data using the backscattering method as described above. This type of device does not have an active transmitter with active transmission capability, but only have a transmitter with backscattering. Therefore, when this type of terminal performs data transmission, the network device is required to provide a carrier, and this type of terminal performs data transmission using backscattering based on the carrier.

2) Zero-power device based on an active transmitter

This type of zero-power device performs uplink data transmission using an active transmitter with active transmission capability. Therefore, when transmitting data, this type of zero-power device can transmit data using its own active transmitter without requiring the network device to provide a carrier. The active transmitter applicable to the zero-power device may be, for example, an ultra-low-power ASK or ultra-low-power FSK transmitter. Based on current implementations, under the condition of transmitting a signal of 100 $\mu$W using this type of transmitter, the overall power consumption can be reduced to 400 $\mu$W - 600 $\mu$W.

3) Zero-power device supporting both backscattering and an active transmitter

This type of terminal supports both backscattering and an active transmitter. The terminal may determine, according to different conditions (such as power status or available ambient energy) or based on the scheduling of the network device, to use which uplink transmission method, i.e., whether to use backscattering or whether to perform active transmission using the active transmitter.

To better understand the embodiments of the present disclosure, the cellular passive IoT involved in the present disclosure will be described.

The cellular IoT is thriving. For example, In 3rd generation partnership project (3GPP), IoT technologies such as narrowband IoT (NB-IoT), MTC, and reduced capability (RedCap) have been standardized. However, there are still many IoT communication requirements under certain scenarios that cannot be satisfied by existing technologies.

An example is harsh communication environments. Some IoT scenarios may face extreme environments such as high temperature, extremely low temperature, high humidity, high pressure, high radiation, or high-speed movement. Examples include ultra-high-voltage substations, high-speed train track monitoring, environmental monitoring in frigid zones, industrial production lines, etc. In these scenarios, due to limitations of the operating environment of conventional power supplies, existing IoT terminals cannot operate. Moreover, extreme environments are also unfavorable for IoT maintenance, such as battery replacement.

Another example is the demand for ultra-small terminal forms. Some IoT communication scenarios, such as food traceability, goods circulation, and smart wearables, require terminals to be extremely small in size for convenient use in such scenarios. For example, IoT terminals used for goods management in circulation are often implemented as electronic tags, which are embedded in product packaging in a very compact form. Another example is lightweight wearable devices, which can improve the user experience while meeting user needs.

Another example is the demand for ultra-low-cost IoT communication. Many IoT communication scenarios require that the cost of IoT terminals be sufficiently low to improve competitiveness compared with other alternative technologies. For example, in logistics or warehousing scenarios, to facilitate the management of a large number of circulating items, IoT terminals can be attached to each item, and communication between the terminal and the logistics network can achieve precise management throughout the entire logistics process and life cycle. These scenarios require IoT terminal prices to be sufficiently competitive.

Therefore, to cover these unmet IoT communication needs, the cellular network also needs to develop ultra-low-cost, ultra-small, battery-free/maintenance-free IoT, and zero-power IoT can precisely meet this demand.

It may be further noted that, zero-power IoT may also be referred to as ambient power enabled IoT, abbreviated as ambient IoT. Specifically, ambient IoT devices refer to IoT devices that use various types of ambient energy, such as RF energy, light energy, solar energy, thermal energy, mechanical energy, etc. The ambient IoT device may not have energy storage capability or may have very limited energy storage capability (e.g., using a capacitor with a capacitance of tens of microfarads ($\mu$F)).

In some embodiments, the ambient IoT device may be used in at least the following four types of scenarios:

object identification, such as logistics management, management of products in production lines, and supply chain management;

environmental monitoring, such as monitoring of temperature, humidity, and harmful gas in operating or natural environments;

positioning, such as indoor positioning, smart item locating, and production line item positioning;

intelligent control, such as intelligent control of various appliances in smart homes (turning on/off air conditioners, adjusting temperature), and intelligent control of various facilities in agricultural greenhouses (automatic irrigation, fertilization).

To better understand the embodiments of the present disclosure, paging involved in the present disclosure will be described.

In existing communication systems, such as LTE and NR, a paging process plays a very important role. At least in the following situations, the network device needs to initiate paging to the terminal device to establish a communication link with the terminal:

1: when the network device becomes aware that the terminal device has data to transmit;
2: when system information is to be updated;
3: when messages such as earthquake, tsunami, or commercial alerts need to be transmitted.

In LTE, for reception of a paging message, the LTE UE attempts to receive a paging message in a specific subframe (referred to as a paging occasion (PO)) in a specific frame (referred to as a paging frame (PF)) within a paging cycle for the LTE UE. PO is a subframe, in which there may be a physical downlink control channel (PDCCH) scrambled with a paging radio network temporary identity (P-RNTI) and indicating a paging message. When discontinuous reception (DRX) is used, the UE only needs to detect one PO per DRX cycle. That is, for each UE, there is only one subframe available for transmitting a paging message in each paging cycle. The DRX cycle and the paging cycle refer to the same concept.

The PF is a radio frame, which may contain one or more POs.

The PF is a system frame that satisfies the following Formula 1:

$$SFN \bmod T = (T \operatorname{div} N) * (UE\_ID \bmod N) \qquad \text{Formula 1}$$

*SFN* denotes a system frame number; $T = \min(T_c, T_{UE})$, where $T_c$ denotes a cell-specific default DRX cycle, which is configured via an information element (IE) *PCCH-Config -> defaultPagingCycle* in system information block 2 (SIB2); $T_{UE}$ denotes a UE-specific DRX cycle, which is configured by an MME via an IE *Paging DRX*; $N = \min(T, nB)$, where *nB* denotes the number of POs contained in each DRX cycle, and *nB* may take the values: *4T, 2T, T, T/2, T/4, T/8, T/16, T/32*; *UE_ID* denotes the identifier (ID) of the UE, where *UE_ID = IMSI mod 1024,* and *IMSI* denotes the international mobile subscriber identification number; *mod* denotes a modulo operation.

Using index *i_s* to look up Table 1 (frequency division duplex, FDD) and Table 2 (time division duplex, TDD), a corresponding PO can be obtained. The value of *i_s* is derived using Formula (2) as follows:

$$i\_s = floor(UE\_ID \ / \ N) \bmod Ns \qquad \text{Formula (2)}$$

*UE_ID* denotes the ID of the UE, where *UE_ID = IMSI mod 1024*; $N = \min(T, nB)$, where *nB* indicates the number of POs contained in each DRX cycle, and *nB* may take the values: *4T, 2T, T, T/2, T/4, T/8, T/16, T/32*; $T = \min(T_c, T_{UE})$, where $T_c$ denotes the cell-specific default DRX cycle, which is configured via the IE *PCCH-Config -> defaultPagingCycle* in SIB2; $T_{UE}$ denotes the UE-specific DRX cycle, which is configured by the MME via the IE *paging DRX*; $N_s$ indicates the number of POs contained in each PF; $Ns = \max(1, nB/T)$, where floor() denotes the floor function, which rounds down to the nearest integer.

Table 1 (FDD)

| $N_s$ | PO when i_s=0 | PO when i_s=1 | PO when i_s=2 | PO when i_s=3 |
|-------|---------------|---------------|---------------|---------------|
| 1 | 9 | N/A | N/A | N/A |
| 2 | 4 | 9 | N/A | N/A |
| 4 | 0 | 4 | 5 | 9 |

Table 2 (TDD (all uplink or downlink configurations))

| $N_s$ | PO when i_s=0 | PO when i_s=1 | PO when i_s=2 | PO when i_s=3 |
|-------|---------------|---------------|---------------|---------------|
| 1 | 0 | N/A | N/A | N/A |
| 2 | 0 | 5 | N/A | N/A |
| 4 | 0 | 1 | 5 | 6 |

It may be noted that, in the above Formula 1 and Formula 2, *T, Tc,* and $T_{UE}$ are all expressed in units of system frames.

For a UE, the PF refers to a system frame used for transmitting a paging message, and the PO refers to a subframe used for transmitting a paging message within the PF.

As can be seen from Formula 1, *T div N* corresponds to dividing a DRX cycle into *N* equal parts, where each part contains a certain number of system frames; *UE_ID mod N* corresponds to selecting the *"UE_ID mod N"*-th part (with a value range of 0 to *N-1*), and the PF is the first system frame of that part.

As can be seen from Formulas 1 and 2, the PF and PO in LTE are determined based on parameters such as the DRX cycle, *nB, N, $N_s$, and UE_ID.*

In the LTE system, a paging message is carried via a physical downlink shared channel (PDSCH) scheduled via a PDCCH. A single PDSCH can carry paging messages for up to 16 UEs. Paging messages for multiple UEs form a *pagingRecordList,* and the UE reads each *PagingRecord* within the *pagingRecordList.* Each *PagingRecord* contains a *ue-Identity* of a paged UE. If the UE finds that the identity of the UE matches a *ue-Identity,* the UE determines that the UE itself has been paged by the network. Since paging messages for multiple UEs are transmitted in the same PDSCH and the network does not know the channel quality for idle-state UEs, the network generally uses a conservative modulation and coding scheme (MCS), a relatively lower code rate, or a relatively large scheduling bandwidth when transmitting paging messages to UEs, to ensure that UEs at the cell edge can receive paging messages.

To facilitate better understanding of the embodiments of the present disclosure, the problem to be solved in the present disclosure is described below.

As described above, in future cellular passive IoT or WLAN passive IoT, or in ambient IoT, new types of ambient IoT devices may be supported within a cellular network to meet different types of IoT communication requirements in various application scenarios.

As mentioned above, traditional paging typically adopts a DRX-based method. The UE determines the location of a PO for the UE within a paging cycle based on the UE_ID of the UE, a paging DRX cycle, and a PO-related parameter(s). The paging message carries the UE ID of the paged device. If the UE detects its own ID in the received paging message, the UE determines that the UE is being paged by the network.

Considering the service characteristics of ambient IoT devices, limitations on capabilities of ambient IoT devices, and constraint on operating power of ambient IoT devices, the traditional paging method cannot meet the needs of ambient IoT devices.

To address the above issue, the present disclosure proposes a paging scheme for ambient IoT devices, including the design of the structure of a paging channel, the design of a PO, the design of a paging message, and a paging process for paging ambient IoT devices. With the technical solution in the present disclosure, when a service arrives, paging can be initiated for ambient IoT devices to trigger service transmission.

To facilitate understanding of the technical solutions of the embodiments of the present disclosure, the technical solutions of the present disclosure are described in detail below through specific embodiments. The following technical features are optional and may be combined arbitrarily with the technical solutions of the embodiments of the present disclosure, and all such combinations fall within the protection scope of the present disclosure. The embodiments of the present disclosure include at least part of the following content.

FIG. 11 is a schematic flow chart illustrating a method 200 for wireless communication according to embodiments of the present disclosure. As illustrated in FIG. 11, the method 200 for wireless communication may include at least part of the following contents.

At S210, a second communication device sends a paging message for a first communication device.

At S220, the first communication device receives the paging message.

In embodiments of the present disclosure, the second communication device is required to send the paging message for the first communication device in order to establish a communication link with the first communication device under at least the following circumstances:

1. The second communication device becomes aware that the first communication device has services to be transmitted;
2. A system message of the first communication device needs to be updated;
3. Messages, such as earthquake alerts, tsunami warnings, or commercial alerts, need to be transmitted.

In some embodiments, the first communication device is an ambient IoT device or a zero-power device.

It may be noted that, in some embodiments, the concepts of ambient IoT devices and zero-power devices may be interchangeable.

In some embodiments, the second communication device may be a network device (such as a base station), or an AP, or a terminal device, or an STA, or a relay device. Of course, the second communication device may also be another type of device, and the embodiments of the present disclosure are not limited in this regard.

For example, the embodiments of the present disclosure may be applicable to a scenario in which a base station pages an ambient IoT device(s), which corresponds to a scenario in which the base station serves the ambient IoT device(s).

In another example, the embodiments of the present disclosure may be applicable to a scenario in which an AP pages an ambient IoT device(s), which corresponds to a scenario in which the AP serves the ambient IoT device(s).

In another example, the embodiments of the present disclosure may be applicable to a scenario in which a terminal device (UE) pages an ambient IoT device(s), which corresponds to a scenario in which the UE serves the ambient IoT device(s). Optionally, a PO resource(s) used by the UE to page an ambient IoT device(s) may be configured by a network device and may differ from a PO resource(s) used by the base station to page an ambient IoT device(s).

In another example, the embodiments of the present disclosure may be applicable to a scenario in which an STA pages an ambient IoT device(s), which corresponds to a scenario in which the STA serves the ambient IoT device(s). Optionally, a PO resource(s) used by the STA to page an ambient IoT device(s) may be configured by an AP and may differ from a PO resource(s) used by the AP to page an ambient IoT device(s).

In yet another example, the embodiments of the present disclosure may be applicable to a scenario in which a relay device pages an ambient IoT device(s), which corresponds to a scenario where the relay device serves the ambient IoT device(s).

It may be noted that, the ambient IoT device is characterized by extremely low complexity (having less or significantly less complexity than traditional cellular IoT terminals, such as NB-IoT or MTC terminals) and extremely low power (microwatts ($\mu$W) to milliwatts (mW)). Therefore, in the embodiments of the present disclosure, paging needs to be designed taking into account the requirements and characteristics of the ambient IoT devices, such as the extremely low complexity and extremely low power.

It may also be noted that, for the ambient IoT device, whether energy (power) is provided by means of RF or other ambient energy such as light or heat, the amount of energy that can be provided is extremely limited (taking into account the size of the ambient IoT device). Therefore, in the embodiments of the present disclosure, it needs to support a simple paging process in order to reduce power consumption of the ambient IoT device.

It may be noted that, the ambient IoT device may have poor capability to maintain clock synchronization. Therefore, in the embodiments of the present disclosure, it needs to consider how the ambient IoT device can correctly receive a paging message.

It may be noted that, for certain services such as logistics, production line monitoring (e.g., monitoring movement of devices along a production line), and warehouse inventory, the entire communication process needs to be completed within a short time period (e.g., a few seconds). During this process, the ambient IoT device may need to perform energy harvesting (if energy is only supplied by a network at the time of service initiation), cell search, synchronization, paging, connection establishment, and data transmission. Therefore, the paging process also needs to be completed within an extremely short time period. Therefore, in the embodiments of the present disclosure, paging needs to be designed taking into account stringent timing requirements for such devices.

In some embodiments, a modulation waveform for the paging message may be an ASK waveform, or may be an on-off keying (OOK) waveform, or may be an FSK waveform, or may be a phase shift keying (PSK) waveform.

Specifically, considering the requirements of the ambient IoT device such low complexity and low power, preferably, an OOK waveform may be used for the paging message for the ambient IoT device, i.e., the paging message is modulated by amplitude modulation. Based on the OOK waveform, a coding scheme such as NRZ coding or Manchester coding may be used. In some implementations, an ASK waveform, an FSK waveform, or a PSK waveform may be used for paging the ambient IoT device.

In some embodiments, to receive the paging message, the first communication device (e.g., the ambient IoT device) may adopt an ultra-low power receiver. For example, for OOK modulation, the first communication device may adopt an envelope detection receiver to receive the paging message. In another example, the first communication device may adopt a wake-up receiver employed in cellular networks for receiving wake-up signals to receive the paging message. In yet another example, the first communication device may adopt a receiver employed in WLAN for receiving wake-up radio (WUR) signals to receive the paging message.

Specifically, the receiver employed in WLAN for receiving WUR signals may detect OOK waveforms, thereby achieving reception power of less than 1 mW with a reception sensitivity of up to -82 dB.

In some embodiments, the modulation waveform for the paging message may be an ASK waveform, or the paging message may be received via envelope detection.

In some embodiments, the paging message may be carried via a paging channel. A transmission parameter(s) for the paging channel may be defined by a protocol, or may be configured via a control channel associated with the paging channel, or may be configured via a broadcast message.

In some embodiments, the transmission parameter(s) for the paging channel may include but is not limited to at least one of: a coding scheme for the paging channel, a transmission duration of the paging channel, or a coding rate for the paging channel.

Optionally, the coding scheme for the paging channel may be one of: NRZ coding, Manchester coding, unipolar RZ coding, DBP coding, Miller coding, or differential coding. Of course, the coding scheme for the paging channel may also be another type of coding scheme, and the present disclosure is not limited in this regard.

Optionally, the transmission duration of the paging channel may include at least one of: the number of OOK symbols, an absolute duation, or the number of bits after encoding.

In some embodiments, the first communication device may receive a control channel and/or a synchronization signal (SS). The control channel is used to configure the transmission parameter(s) for the paging channel carrying the paging message, and the SS is used by the first communication device for clock synchronization.

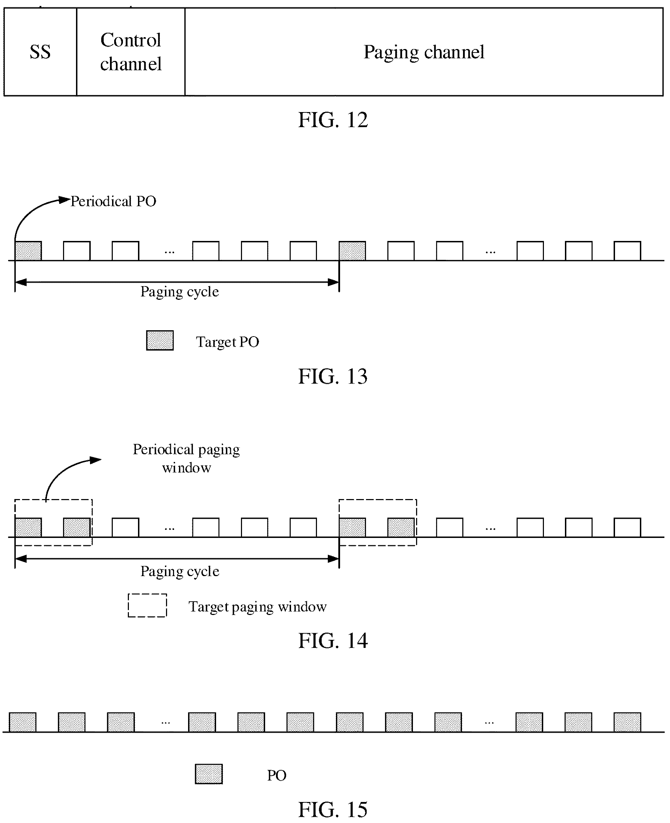

Specifically, the control channel and/or the SS may be received by the first communication device prior to receiving the paging message. A corresponding channel structure is illustrated in FIG. 12.

Specifically, the SS may be composed of a specific sequence, such as 0, 1, 0, 1, 0, 1, 0, 1, 0, 1, 0, 1..., or another sequence such as 1, 1, 1, 1, 0, 1, 0, 1, 0, 0, 0, 1. The first communication device (e.g., the ambient IoT device) may determine, for the sequence, a symbol length of each bit subject to encoding based on level transitions, and may train its device clock based on that length.

In some embodiments, a modulation waveform for the control channel may be an ASK waveform, or the control channel may be received via envelope detection.

In some embodiments, the modulation waveform for the control channel may be an ASK waveform, or may be an OOK waveform, or may be an FSK waveform, or may be a PSK waveform.

In some embodiments, a modulation waveform for the SS may be an ASK waveform, or the SS may be received via envelope detection.

In some embodiments, the modulation waveform for the SS may be an ASK waveform, or may be an OOK waveform, or may be an FSK waveform, or may be a PSK waveform.

In some embodiments, the coding scheme for the control channel may be defined by a protocol, and/or the sequence of the SS may be defined by a protocol.

Optionally, the coding scheme for the control channel may be one of: NRZ coding, Manchester coding, unipolar RZ coding, DBP coding, Miller coding, or differential coding. Of course, the coding scheme for the control channel may also be another type of coding scheme, and the present disclosure is not limited in this regard.

In some embodiments, each of POs for the first communication device (e.g., the ambient IoT device) to receive a paging message is a target PO within each of paging cycles. That is, for the first communication device (e.g., the ambient IoT device), a PO refers to a predefined paging monitoring position within one or more slots or radio frames. The first communication device (e.g., the ambient IoT device) may adopt periodic POs. As illustrated in FIG. 13, each PO for the first communication device (e.g., the ambient IoT device) to receive a paging message is a target PO within each paging cycle.

In some embodiments, the POs for the first communication device to receive a paging message are all POs within a target paging window of each of the paging cycles. Specifically, the target paging window may contain multiple POs, and at each PO within the target paging window, the first communication device (e.g., the ambient IoT device) needs to perform paging message monitoring until a paging message is received. In other words, in the embodiment, the target paging window for receiving a paging message is introduced for the first communication device (e.g., the ambient IoT device), allowing the first communication device to receive a paging message at any PO within the target paging window, thereby improving the flexibility of the second communication device in utilizing paging resources. The second communication device can also page the first communication device (e.g., the ambient IoT device) multiple times within each paging cycle, thereby increasing the accuracy of receiving a paging message by the first communication device and reducing paging delay. As illustrated in FIG. 14, the POs for the first communication device (e.g., the ambient IoT device) to receive a paging message are all POs within the target paging window of each paging cycle.

In some embodiments, the POs for the first communication device to receive a paging message are all preconfigured POs. That is, in the embodiment, the first communication device (e.g., the ambient IoT device) is no longer restricted to receiving a paging message within a limited PO range, and can receive a paging message at all POs. Since the first communication device (e.g., the ambient IoT device) can receive a paging message at any PO, the second communication device can initiate paging at the next available PO as soon as the first communication device needs to be paged, thus minimizing paging delay to the greatest extent. As illustrated in FIG. 15, the POs for the first communication device (e.g., the ambient IoT device) to receive a paging message are all the preconfigured POs.

In some embodiments, S220 mentioned above may specifically include the following. The first communication device receives the paging message in a target mode, where the target mode is one of multiple modes, and the multiple modes include, but are not limited to, at least two of the following modes: Mode 1, Mode 2, or Mode 3. In Mode 1, each PO for the first communication device to receive a paging message is the target PO within each paging cycle. In Mode 2, the POs for the first communication device to receive a paging message are all POs within the target paging window of each paging cycle. In Mode 3, the POs for the first communication device to receive a paging message are all the preconfigured POs.

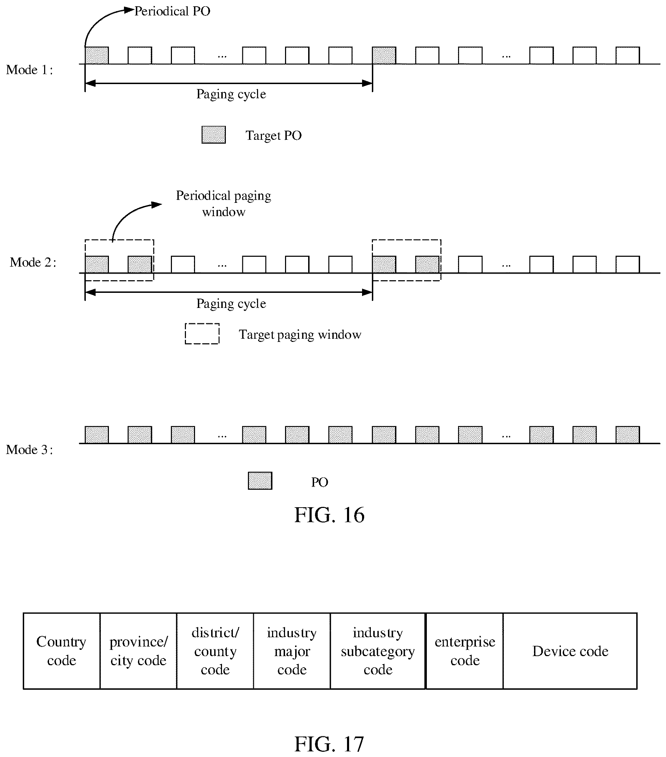

Specifically, Modes 1, 2, and 3 are illustrated in FIG. 16.

In some embodiments, the target mode is preconfigured by the network device, or the target mode is preconfigured by the second communication device.

In some embodiments, each target PO is determined based on at least one of: identity information of the first communication device, type information of the first communication device, or service type information executed by the first communication device. Specifically, for example, for a method for determining the target PO based on the identity information of the first communication device, reference may be made to Formula 1 and Formula 2 mentioned above, which is not repeated here. A method for determining the target PO based on the type information of the first communication device or the service type information executed by the first communication device is similar to the method for determining the target PO based on the identity information of the first communication device, where $UE\_ID$ in Formula 1 and Formula 2 may be replaced with the type information (e.g., ID or index) of the first communication device or the service type information (e.g., ID or index) executed by the first communication device, which is not repeated here.

In some embodiments, each target paging window is determined based on at least one of: the identity information of the first communication device, the type information of the first communication device, or the service type information executed by the first communication device.

Specifically, for the method for determining the target paging window based on the identity information of the first communication device, reference may be made to Formula 1 and Formula 2 mentioned above, which is not repeated here. For example, as illustrated in FIG. 14 or FIG. 16, the starting position of the target paging window may be determined based on the identity information of the first communication device (e.g., referring to Formula 1 and Formula 2), and based on the determined starting position and the length of the target paging window, the target paging window may be finally determined. Optionally, the length of the target paging window may be defined by a protocol or configured by the network.

Specifically, the method for determining the target paging window based on the type information of the first communication device or the method for determining the target paging window based on the service type information executed by the first communication device is similar to the method for determining the target paging window based on the identity information of the first communication device, and thus reference can be made to related illustration, which is not repeated here.

In some embodiments, POs within the same paging cycle are continuous in time domain, or are discontinuous in time domain.

In some embodiments, the starting position of each paging cycle is determined based on a radio frame number and/or a slot number. For example, POs are distributed in time domain based on system-defined time (e.g., system frame number (SFN)), and a paging cycle is an integer multiple of system radio frames.

In some embodiments, the starting position of each paging cycle is determined based on the time-domain position of a first target signal. Optionally, the first target signal is one of the following: a beacon signal, an SS, or a broadcast signal. Specifically, for example, the periodic distribution of POs is anchored to a specific signal (e.g., a beacon signal, an SS, or a broadcast signal). That is, the starting position of the paging cycle of POs is a position with a specific time offset relative to a specific signal. Alternatively, the starting position of the paging cycle of POs may be configured in real time via a beacon signal, an SS, or a broadcast signal. This method is more suitable for scenarios of bursty services, such as logistics inventory. Since the inventory process may be relatively short, it is preferable for the network device to flexibly configure PO resource allocation in real time.

In some embodiments, the starting position of each preconfigured PO is determined based on a radio frame number and/or a slot number.

In some embodiments, the starting position of each preconfigured PO is determined based on the time-domain position of a second target signal. Optionally, the second target signal is one of the following: a beacon signal, an SS, or a broadcast signal.

In some embodiments, a payload of the paging message includes at least one of the following: identity information or access resource configuration, where the identity information indicates a target of the paging message, and the access resource configuration indicates resource configuration information for network access performed after the paging message is received.

In some embodiments, in a case where the payload of the paging message includes the identity information, the identity information is an identifier (ID) of the first communication device, or a portion of the ID of the first communication device. Specifically, the paging message sent by the second communication device to the first communication device (e.g., the ambient IoT device) may contain the device ID of the first communication device to be paged (e.g., the ambient IoT device), so as to indicate a paging target. The device ID may be a complete ambient IoT device ID, or a portion of the ambient IoT device ID, or a simplified device ID corresponding to the ambient IoT device ID (to reduce the total number of bits).

In some embodiments, in a case where the payload of the paging message contains the identity information, the identity information are IDs of multiple communication devices, where the multiple communication devices include the first communication device (e.g., the ambient IoT device). That is, in the embodiment, the paging message may be used to page multiple communication devices simultaneously. Optionally, all the multiple communication devices are ambient IoT devices, or at least part of the multiple communication devices are ambient IoT devices.

In some embodiments, in a case where the identity information are IDs of multiple communication devices, the IDs of the multiple communication devices are carried in a first information field of the paging message in a first order. Optionally, the first order is defined by a protocol, or the first order is configured by a network device. Optionally, the first information field is a device ID field. Certainly, the first information field may be another type of information field, which is not limited in the embodiments of the present disclosure.

In some embodiments, in a case where the payload of the paging message includes the identity information, the identity information is a group ID, where the first communication device belongs to a group identified by the group ID.

Specifically, because ambient IoT may be applied to a wide variety of application scenarios, such as logistics, warehousing, energy, environmental monitoring, industrial automation, positioning, smart home, and the like, it may be expected that, the number of ambient IoT devices will be extremely large, far exceeding the number of existing terminal devices. Therefore, the length of the ambient IoT device ID may be relatively long, such as 128 bits (greater than the 64-bit length of the 5G NR IMSI. If the ID is directly carried in the paging message, the resource overhead may be significant. In the embodiment, device IDs of ambient IoT devices are grouped, each group of ambient IoT devices is represented by a group ID, and the group ID is carried in the paging message to perform paging.

In some embodiments, in a case where the identity information is a group ID, the group ID is determined based on the ID of the first communication device, or the group ID is determined based on the service type executed by the first communication device, or the group ID is preconfigured for the first communication device, or the group ID is determined based on a target information field in the ID of the first communication device.

In some embodiments, in a case where the group ID is determined based on the ID of the first communication device, the group ID is determined according to Formula (3) or Formula (4).

$$Group\ ID = device\ ID\ mod\ N \qquad \text{Formula 3}$$

, where *Group ID* indicates the group ID, *device ID* indicates the ID of the first communication device, *N* indicates the number of groups and is a positive integer, and *mod* indicates a modulo operation.

$$Group\ ID = (device\ ID\ mod\ M)\ mod\ N \qquad \text{Formula 4}$$

, where *Group ID* indicates the group ID, *device ID* indicates the ID of the first communication device, *N* indicates the number of groups, *M* and *N* are both positive integers, and *mod* indicates a modulo operation.

In some embodiments, *M* represents the number of POs within each paging cycle.

Specifically, for example, the device ID of the ambient IoT device may be processed to obtain a group ID, for example, a modulo operation is performed on the device ID (modulo *N*, where *N* may be the number of groups, which may be preset or configured by the network), and the resulting remainder is taken as the group ID, as illustrated in Formula 3. Alternatively, a further modulo operation may be performed on the result obtained by performing the modulo operation on the device ID, and the resulting remainder is taken as the group ID, as illustrated in Formula 4.

In some embodiments, in a case where the group ID is determined based on the service type executed by the first communication device, different service types correspond to different groups, and the correspondence between service types and group IDs is either preconfigured by a network device or defined by a protocol.

Specifically, for example, grouping may be based on different service type numbers. For example, inventory-type services may correspond to inventory-type paging group IDs; positioning-type services may correspond to positioning-type paging group IDs; and sensing-type services may correspond to sensing-type paging group IDs. Each type of paging group ID may correspond to a number or correspond to a bit in a bitmap (e.g., if there are four types of paging group IDs, a 4-bit bitmap may be used). An ambient IoT device supporting a type of function may determine whether a group to which the ambient IoT device belongs is paged based on the indication of a group to which the ambient IoT device belongs.

Specifically, in another example, paging may be based on read operations (e.g., reading a memory of the ambient IoT device to obtain ID information, production date, etc.) or write operations (e.g., writing ID information, production date, etc., to the memory of the ambient IoT device).

In some embodiments, in a case where the group ID is preconfigured for the first communication device, the group ID may be factory-preconfigured for the first communication device or may be configured by the network when the first communication device accesses the network.

Specifically, for example, the ambient IoT device may be preconfigured (factory-preconfigured for the device or assigned by a network upon network access) with a group ID. For example, the pre-configuration may be based on the service type, and multiple service subtypes may be further preconfigured for ambient IoT devices of the same service type, so that the ambient IoT devices of the same service type may correspond to different group IDs.

In some embodiments, in a case where the group ID is determined based on the target information field in the ID of the first communication device, different information fields in the ID of the first communication device correspond to different groups, and the correspondence between information fields for the first communication device and group IDs is either preconfigured by a network device or defined by a protocol.

Specifically, for example, the device ID of the first communication device (e.g., the ambient IoT device) may be as illustrated in FIG. 17. A country code represents a number assigned to a country in the world, a province/city code represents a number assigned to an administrative region at the provincial or municipal level; a district/county code represents a number assigned to an administrative region at the district or county level; an industry major code represents a major industry category of the industry in which the ambient IoT device is applied, such as transportation, energy, logistics, environmental monitoring, and the like; an industry subcategory code represents a specific industry, such as coal, oil, natural gas, hydropower, wind power within energy, and the like; an enterprise code represents a codeword assigned to an enterprise in which the first communication device is applied, e.g., a number of an operator or a number of a logistics provider; and an identity code represents a unique number for the device after the above assignment.

Thus, different fields (bit fields) in the device ID may be used in a paging message for paging as needed. For example, a network device in a logistics station may use a specific district code for paging, causing all ambient IoT devices for logistics goods corresponding to the specific district code to be paged. In another example, a network device in a warehouse of an e-commerce platform may use an enterprise code (e.g., for refrigerators of a brand) for paging, causing all refrigerators of that brand in the warehouse to be paged.

Therefore, in the embodiments, paging for different ambient IoT devices may be performed flexibly and on-demand (e.g., based on geographic regions, industry categories, manufacturer or brand) based on various requirements, enabling communication initiation.

In some embodiments, in a case where the payload of the paging message does not include the identity information, or in a case where the identity information in the payload of the paging message is a target value, all communication devices that receive the paging message are paged.

For example, in certain scenarios, e.g., in an initial inventory operation for newly arrived goods in a warehouse, the second communication device may not possess the device ID of the first communication device (e.g., the ambient IoT device). In such cases, ID-less paging may be employed, i.e., the payload of the paging message does not include the identity information. In this case, the paging message does not carry the device ID. ID-less paging is indicated, e.g., indicated via a specific value of a specific bit field in the paging message. In ID-less paging, all ambient IoT devices that receive the paging message are paged.

In some embodiments, as illustrated in FIG. 12, the group ID may be sent via a control channel, and the specific device ID of the first communication device (e.g., the ambient IoT device) is carried in the paging message. In this case, the first communication device only proceeds to receive the subsequent paging message in a case where the group ID corresponding to the first communication device is detected by the first communication device.

In some embodiments, in a case where the paging message contains access resource configuration, the resource configuration information includes at least one of: frequency-domain information of an access resource, time-domain information of the access resource, periodicity information of the access resource, or access control information.

Specifically, the paging message may carry resource configuration information used by the ambient IoT device to perform network access after receiving the paging message, for example, a frequency-domain resource of the access resource per cycle (e.g., a channel number, a bandwidth size, the number of channels, a size of the frequency-domain resource, and so on), time-domain resource assignment (e.g., the starting position of a time-domain resource (e.g., a time offset relative to the paging message), and a duration, the number of slots, the number of symbols per slot, and other necessary parameters for the time-domain resource per cycle), a cycle of the access resource (in a case where the access resource spans multiple cycles), the access control information (e.g., control based on access level or device capability), and so on.

Accordingly, in the embodiments of the present disclosure, paging for ambient IoT devices can be achieved. Specifically, in the embodiments of the present disclosure, a structure of a paging channel, POs, a paging message, and a paging process for ambient IoT devices may be designed. By means of the technical solutions in the present disclosure, paging may be initiated for ambient IoT devices upon service arrival, thereby triggering the service transmission process.

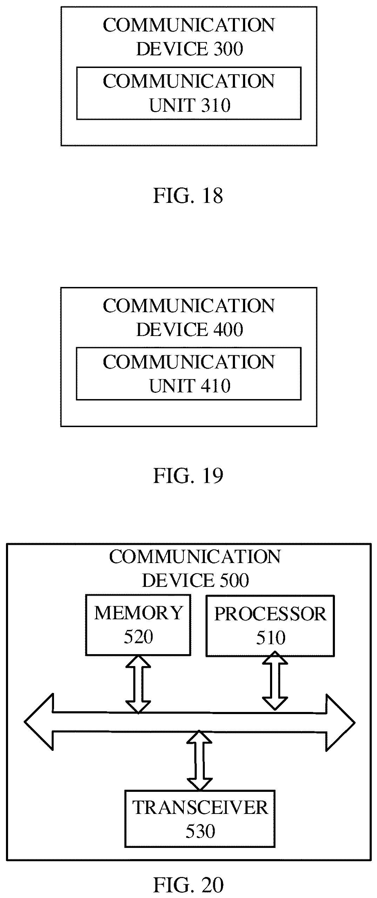

The above describes the method embodiments of the present disclosure in detail in combination with FIGS. 11 - 17. The following will describe the device embodiments of the present disclosure in detail in combination with FIGS. 18 -22. It may be noted that, the device embodiments correspond to the method embodiments, and thus for similar illustrations, reference can be made to the method embodiments.

FIG. 18 is a schematic block diagram of a communication device 300 according to embodiments of the present disclosure. The communication device 300 may be a first communication device. As illustrated in FIG. 18, the communication device includes a communication unit 310 configured to receive a paging message.

In some embodiments, the paging message is carried via a paging channel, where a transmission parameter for the paging channel is determined by a protocol, or configured via a control channel associated with the paging channel, or configured via a broadcast message.

In some embodiments, the communication unit 310 is further configured to receive a control channel and/or an SS, where the control channel is used to configure a transmission parameter for a paging channel carrying the paging message, and the SS is used by the first communication device for clock synchronization.

In some embodiments, a modulation waveform for the control channel is an ASK waveform, or the control channel is received via envelope detection; and/or a modulation waveform for the SS is an ASK waveform, or the SS is received via envelope detection.

In some embodiments, a coding scheme for the control channel is determined by a protocol; and/or, a sequence of the SS is determined by a protocol.

In some embodiments, the transmission parameter for the paging channel includes at least one of: a coding scheme for the paging channel, a transmission duration of the paging channel, or a coding rate for the paging channel.

In some embodiments, each of POs for the first communication device to receive the paging message is a target PO within each of paging cycles, or the POs for the first communication device to receive the paging message are all POs in a target paging window of each of the paging cycles, or the POs for the first communication device to receive the paging message are all preconfigured POs.

In some embodiments, the communication unit 310 is specifically configured to receive the paging message in a target manner. The target manner is one of multiple manners, and the multiple manners include at least two of: a first manner, a second manner, or a third manner. In the first manner, each of the POs for the first communication device to receive the paging message is a target PO within each of the paging cycles; in the second manner, the POs for the first communication device to receive the paging message are all POs in a target paging window of each of the paging cycles; in the third manner, the POs for the first communication device to receive the paging message are all preconfigured POs.

In some embodiments, the target manner is preconfigured by a network device.

In some embodiments, each target PO is determined based on at least one of: identity information of the first communication device, type information of the first communication device, or service type information executed by the first communication device; and/or each target paging window is determined based on at least one of: the identity information of the first communication device, the type information of the first communication device, or the service type information executed by the first communication device.

In some embodiments, POs within a same paging cycle are continuous in time domain or discontinuous in time domain.

In some embodiments, a starting position of each of the paging cycles is determined based on a radio frame number and/or a slot number, or based on a time-domain position of a first target signal.

In some embodiments, the first target signal is one of: a beacon signal, an SS, or a broadcast signal.

In some embodiments, a starting position of each of the preconfigured POs is determined based on a radio frame number and/or a slot number, or based on a time-domain position of a second target signal.

In some embodiments, the second target signal is one of: a beacon signal, an SS, or a broadcast signal.

In some embodiments, a payload of the paging message includes at least one of identity information or access resource configuration. The identity information indicates a target of the paging message, and the access resource configuration indicates resource configuration information for network access after reception of the paging message.

In some embodiments, in a case where the payload of the paging message includes the identity information, the identity information is an ID of the first communication device, or a portion of the ID of the first communication device, or IDs of multiple communication devices, or a group ID. The multiple communication devices include the first communication device, and the first communication device belongs to a group identified by the group ID.

In some embodiments, in a case where the identity information is the IDs of the multiple communication devices, the IDs of the multiple communication devices are carried in a first information field of the paging message in a first order.

In some embodiments, the first order is determined by a protocol, or configured by a network device.

In some embodiments, in a case where the identity information is the group ID, the group ID is determined based on the ID of the first communication device, or based on a service type executed by the first communication device, or is preconfigured for the first communication device, or is determined based on a target information field in the ID of the first communication device.

In some embodiments, in a case where the group ID is determined based on the ID of the first communication device, the group ID is determined by the following formulas: *Group ID = device ID mod N;* or *Group ID = (device ID mod M) mod N,* where *Group ID* denotes the group ID, *device ID* denotes the ID of the first communication device, *N* denotes the number of groups, *M* and *N* are positive integers, and *mod* denotes a modulo operation.

In some embodiments, *M* represents the number of POs within each paging cycle.

In some embodiments, in a case where the group ID is determined based on the service type executed by the first communication device, different service types correspond to different groups, and a correspondence between service types and group IDs is preconfigured by a network device or determined by a protocol.

In some embodiments, in a case where the group ID is preconfigured for the first communication device, the group ID is factory-preconfigured for the first communication device, or is configured by a network when the first communication device accesses the network.

In some embodiments, in a case where the group ID is determined based on the target information field in the ID of the first communication device, different information fields in the ID of the first communication device correspond to different groups, and a correspondence between information fields for the first communication device and group IDs is preconfigured by a network device or determined by a protocol.

In some embodiments, in a case where the payload of the paging message does not include the identity information, or the identity information in the payload of the paging message is a target value, all communication devices that receive the paging message are paged.

In some embodiments, in a case where the paging message includes the access resource configuration, the resource configuration information includes at least one of: frequency-domain information of an access resource, time-domain information of the access resource, periodicity information of the access resource, or access control information.

In some embodiments, a modulation waveform for the paging message is an ASK waveform, or an OOK waveform, or an FSK waveform, or a PSK waveform.

In some embodiments, the first communication device is an ambient IoT device or a zero-power device.

In some embodiments, the above communication unit may be a communication interface or a transceiver, or an input/output interface of a communication chip or a system on chip (SoC). The above processing unit may be one or more processors.

It may be understood that, the communication device 300 according to the embodiments of the present disclosure may correspond to the first communication device in the method embodiments of the present disclosure. The above and other operations and/or functions of each unit in the communication device 300 are respectively used to implement the corresponding procedures of the first communication device in the method 200 as illustrated in FIG. 11. For simplicity, details are not repeated herein.

FIG. 19 is a schematic block diagram of a communication device 400 according to embodiments of the present disclosure. The communication device 400 may be a second communication device. As illustrated in FIG. 19, the communication device 400 includes a communication unit 410 configured to send a paging message for a first communication device.

In some embodiments, the paging message is carried via a paging channel, where a transmission parameter for the paging channel is determined by a protocol, or configured via a control channel associated with the paging channel, or configured via a broadcast message.

In some embodiments, the communication unit 410 is further configured to send a control channel and/or an SS, where the control channel is used to configure a transmission parameter for a paging channel carrying the paging message, and the SS is used by the first communication device for clock synchronization.

In some embodiments, a modulation waveform for the control channel is an ASK waveform, or the control channel is received via envelope detection; and/or a modulation waveform for the SS is an ASK waveform, or the SS is received via envelope detection.

In some embodiments, a coding scheme for the control channel is determined by a protocol; and/or, a sequence of the SS is determined by a protocol.

In some embodiments, the transmission parameter for the paging channel includes at least one of: a coding scheme for the paging channel, a transmission duration of the paging channel, or a coding rate for the paging channel.

In some embodiments, each of POs for the first communication device to receive the paging message is a target PO within each of paging cycles, or the POs for the first communication device to receive the paging message are all POs in a target paging window of each of the paging cycles, or the POs for the first communication device to receive the paging message are all preconfigured POs.

In some embodiments, the paging message is received by the first communication device in a target manner. The target manner is one of multiple manners, and the multiple manners include at least two of: a first manner, a second manner, or a third manner. In the first manner, each of the POs for the first communication device to receive the paging message is a target PO within each of paging cycles; in the second manner, the POs for the first communication device to receive the paging message are all POs in a target paging window of each of the paging cycles; in the third manner, the POs for the first communication device to receive the paging message are all preconfigured POs.

In some embodiments, the target manner is preconfigured by a network device, or the target manner is preconfigured by the second communication device.

In some embodiments, each target PO is determined based on at least one of: identity information of the first communication device, type information of the first communication device, or service type information executed by the first communication device; and/or the target paging window is determined based on at least one of: the identity information of the first communication device, the type information of the first communication device, or the service type information executed by the first communication device.

In some embodiments, POs within a same paging cycle are continuous in time domain or discontinuous in time domain.

In some embodiments, a starting position of each of the paging cycles is determined based on a radio frame number and/or a slot number, or based on a time-domain position of a first target signal.

In some embodiments, the first target signal is one of: a beacon signal, an SS, or a broadcast signal.

In some embodiments, a starting position of each of the preconfigured POs is determined based on a radio frame number and/or a slot number, or based on a time-domain position of a second target signal.

In some embodiments, the second target signal is one of: a beacon signal, an SS, or a broadcast signal.

In some embodiments, a payload of the paging message includes at least one of identity information or access resource configuration. The identity information indicates a target of the paging message, and the access resource configuration indicates resource configuration information for network access after reception of the paging message.

In some embodiments, in a case where the payload of the paging message includes the identity information, the identity information is an ID of the first communication device, or a portion of the ID of the first communication device, or IDs of multiple communication devices, or a group ID. The multiple communication devices include the first communication device, and the first communication device belongs to a group identified by the group ID.

In some embodiments, in a case where the identity information is the IDs of the multiple communication devices, the IDs of the multiple communication devices are carried in a first information field of the paging message in a first order.

In some embodiments, the first order is determined by a protocol, or configured by a network device.

In some embodiments, in a case where the identity information is the group ID, the group ID is determined based on the ID of the first communication device, or based on a service type executed by the first communication device, or is preconfigured for the first communication device, or is determined based on a target information field in the ID of the first communication device.

In some embodiments, in a case where the group ID is determined based on the ID of the first communication device, the group ID is determined by the following formulas: *Group ID = device ID mod N;* or *Group ID = (device ID mod M) mod N,* where *Group ID* denotes the group ID, *device ID* denotes the ID of the first communication device, $N$ denotes a number of groups, $M$ and $N$ are positive integers, and *mod* denotes a modulo operation.

In some embodiments, $M$ represents a number of POs within each paging cycle.

In some embodiments, in a case where the group ID is determined based on the service type executed by the first communication device, different service types correspond to different groups, and a correspondence between service types and group IDs is preconfigured by a network device or determined by a protocol.

In some embodiments, in a case where the group ID is preconfigured for the first communication device, the group ID is factory-preconfigured for the first communication device, or is configured by a network when the first communication device accesses the network.

In some embodiments, in a case where the group ID is determined based on the target information field in the ID of the first communication device, different information fields in the ID of the first communication device correspond to different groups, and a correspondence between information fields for the first communication device and group IDs is preconfigured by a network device or determined by a protocol.

In some embodiments, in a case where the payload of the paging message does not include the identity information, or the identity information in the payload of the paging message is a target value, all communication devices that receive the paging message are paged.

In some embodiments, in a case where the paging message includes the access resource configuration, the resource configuration information includes at least one of: frequency-domain information of an access resource, time-domain information of the access resource, periodicity information of the access resource, or access control information.

In some embodiments, a modulation waveform for the paging message is an ASK waveform, or an OOK waveform, or an FSK waveform, or a PSK waveform.

In some embodiments, the first communication device is an ambient IoT device or a zero-power device; and/or, the second communication device is a network device, an AP, a station, a terminal device, or a relay device.

In some embodiments, the above communication unit may be a communication interface or a transceiver, or an input/output interface of a communication chip or a SoC. The above processing unit may be one or more processors.

It may be understood that, the communication device 400 according to embodiments of the present disclosure may correspond to the second communication device in the method embodiments of the present disclosure. The above-described and other operations and/or functions of the respective units in the communication device 400 are respectively used to implement the corresponding procedures performed by the second communication device in the method 200 as illustrated in FIG. 11. For simplicity, repeated illustration is omitted herein.

FIG. 20 is a schematic structural diagram of a communication device 500 according to embodiments of the present disclosure. As illustrated in FIG. 20, the communication device 500 includes a processor 510, which may invoke and execute a computer program from a memory to implement the methods of the embodiments of the present disclosure.

In some embodiments, as illustrated in FIG. 20, the communication device 500 may further include a memory 520. The processor 510 may invoke and execute a computer program from the memory 520 to implement the methods of the embodiments of the present disclosure.

The memory 520 may be a separate component independent of the processor 510, or may be integrated within the processor 510.

In some embodiments, as illustrated in FIG. 20, the communication device 500 may further include a transceiver 530. The processor 510 may control the transceiver 530 to communicate with other devices. Specifically, the transceiver 530 may be configured to send information or data to other devices, or receive information or data from other devices.

The transceiver 530 may include a transmitter and a receiver, and may further include one or more antennas.

In some embodiments, the processor 510 may implement the functions of the processing unit in the communication device 300, or may implement the functions of the processing unit in the communication device 400. For simplicity, repeated illustration is omitted herein.

In some embodiments, the transceiver 530 may implement the functions of the communication unit in the communication device 300. For simplicity, repeated illustration is omitted herein.

In some embodiments, the transceiver 530 may implement the functions of the communication unit in the communication device 400. For simplicity, repeated illustration is omitted herein.

In some embodiments, the communication device 500 may specifically be the first communication device in the embodiments of the present disclosure, and may implement the corresponding procedures performed by the first communication device in each method of the present disclosure. For simplicity, repeated illustration is omitted herein.

In some embodiments, the communication device 500 may specifically be the second communication device in the embodiments of the present disclosure, and may implement the corresponding procedures performed by the second communication device in each method of the present disclosure. For simplicity, repeated illustration is omitted herein.

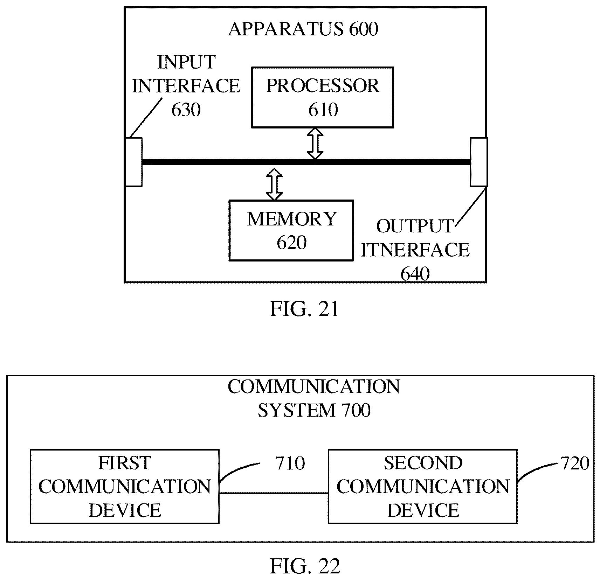

FIG. 21 is a schematic structural diagram of an apparatus 600 according to an embodiment of the present disclosure. As illustrated in FIG. 21, the apparatus 600 includes a processor 610, which may invoke and execute a computer program from a memory to implement the methods of the embodiments of the present disclosure.

In some embodiments, as illustrated in FIG. 21, the apparatus 600 may further include a memory 620. The processor 610 may invoke and execute a computer program from the memory 620 to implement the methods of the embodiments of the present disclosure.

The memory 620 may be a separate component independent of the processor 610, or may be integrated within the processor 610.

In some embodiments, the processor 610 may implement the functions of the processing unit in the communication device 300, or may implement the functions of the processing unit in the communication device 400. For simplicity, repeated illustration is omitted herein.

In some embodiments, the apparatus 600 may further include an input interface 630. The processor 610 may control the input interface 630 to communicate with other devices or chips, specifically to obtain information or data sent from other devices or chips. Optionally, the processor 610 may be located inside or outside the chip.

In some embodiments, the input interface 630 may implement the functions of the communication unit in the communication device 300, or the communication unit in the communication device 400.

In some embodiments, the apparatus 600 may further include an output interface 640. The processor 610 may control the output interface 640 to communicate with other devices or chips, specifically to output information or data to other devices or chips. Optionally, the processor 610 may be located inside or outside the chip.

In some embodiments, the output interface 640 may implement the functions of the communication unit in the communication device 300, or the communication unit in the communication device 400.

In some embodiments, the apparatus may be applied to the first communication device in the embodiments of the present disclosure, and may implement the corresponding procedures performed by the first communication device in each method of the present disclosure. For simplicity, repeated illustration is omitted herein.

In some embodiments, the apparatus may be applied to the second communication device in the embodiments of the present disclosure, and may implement the corresponding procedures performed by the second communication device in the each method of the present disclosure. For simplicity, repeated illustration is omitted herein.

In some embodiments, the apparatus described in the embodiments of the present disclosure may also be a chip. For example, the apparatus may be an SoC), a system-level chip, a chip system, or an on-chip system, etc.

FIG. 22 is a schematic block diagram of a communication system 700 according to embodiments of the present disclosure. As illustrated in FIG. 22, the communication system 700 includes a first communication device 710 and a second communication device 720.

The first communication device 710 may be configured to implement the corresponding functions performed by the first communication device in the above-described method, and the second communication device 720 may be configured to implement the corresponding functions performed by the second communication device in the above-described method. For simplicity, repeated illustration is omitted herein.

It may be understood that, the processor in embodiments of the present disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the present disclosure can be implemented or executed. The general-purpose processor may be a microprocessor, or the processor may be any conventional processor or the like. The steps of the method disclosed in embodiments of the present disclosure may be directly implemented by a hardware decoding processor, or may be performed by hardware and software modules in the decoding processor. The software module can be located in a storage medium well known in the art such as a random access memory (RAM), a flash memory, a read only memory (ROM), a programmable ROM (PROM), or an electrically erasable programmable memory, a register, and the like. The storage medium is located in the memory. The processor can read the information in the memory, and complete the steps of the method described above with the hardware thereof.

It may be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory may be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the present disclosure is intended to include, but is not limited to, these and any other suitable types of memory.

It may be understood that, the memory above is intended for illustration rather than limitation. For example, the memory in embodiments of the present disclosure may also be an SRAM, a DRAM, an SDRAM, a DDR SDRAM, an ESDRAM, an SLDRAM, a DR RAM, etc. In other words, the memory in embodiments of the present disclosure is intended to include, but is not limited to, these and any other suitable types of memory.

Embodiments of the present disclosure further provide a computer-readable storage medium for storing a computer program.

In some embodiments, the computer-readable storage medium may be applied to the communication device in the embodiments of the present disclosure, and the computer program enables a computer to execute the corresponding procedures performed by the first communication device in the each method of the present disclosure. For simplicity, repeated illustration is omitted herein.

In some embodiments, the computer-readable storage medium may be applied to the communication device in the embodiments of the present disclosure, and the computer program enables a computer to execute the corresponding procedures performed by the second communication device in each method of the present disclosure. For simplicity, repeated illustration is omitted herein.

Embodiments of the present disclosure further provide a computer program product including computer program instructions.

In some embodiments, the computer program product may be applied to the communication device in the embodiments of the present disclosure, and the computer program instructions enable a computer to execute the corresponding procedures performed by the first communication device in each method of the present disclosure. For simplicity, repeated illustration is omitted herein.

In some embodiments, the computer program product may be applied to the communication device in the embodiments of the present disclosure, and the computer program instructions enable a computer to execute the corresponding procedures performed by the second communication device in each method of the present disclosure. For simplicity, repeated illustration is omitted herein.

Embodiments of the present disclosure further provide a computer program.

In some embodiments, the computer program may be applied to the communication device in the embodiments of the present disclosure, and the computer program instructions enable a computer to execute the corresponding procedures performed by the first communication device in each method of the present disclosure. For simplicity, repeated illustration is omitted herein.

In some embodiments, the computer program may be applied to the communication device in the embodiments of the present disclosure, and the computer program instructions enable a computer to execute the corresponding procedures performed by the second communication device in each method of the present disclosure. For simplicity, repeated illustration is omitted herein. For simplicity, repeated illustration is omitted herein.

Those of ordinary skill in the art may appreciate that, units and algorithmic operations of various examples described in connection with embodiments of the present disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the present disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple network units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the present disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the present disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
   receiving, by a first communication device, a paging message.

2. The method according to claim 1, wherein

   the paging message is carried via a paging channel;
   wherein a transmission parameter for the paging channel is determined by a protocol, or configured via a control channel associated with the paging channel, or configured via a broadcast message.

3. The method according to claim 1 or claim 2, further comprising:

   receiving, by the first communication device, a control channel and/or a synchronization signal (SS);
   wherein the control channel is used to configure a transmission parameter for a paging channel carrying the paging message, and the SS is used by the first communication device for clock synchronization.

4. The method according to claim 3, wherein

   a modulation waveform for the control channel is an amplitude shift keying (ASK) waveform, or the control channel is received via envelope detection; and/or
   a modulation waveform for the SS is an ASK waveform, or the SS is received via envelope detection.

5. The method according to claim 3 or claim 4, wherein
   a coding scheme for the control channel is determined by a protocol; and/or, a sequence of the SS is determined by a protocol.

6. The method according to any one of claims 2 to 5, wherein
   the transmission parameter for the paging channel comprises at least one of: a coding scheme for the paging channel, a transmission duration of the paging channel, or a coding rate for the paging channel.

7. The method according to any of claims 1 to 6, wherein
each of paging occasions (POs) for the first communication device to receive the paging message is a target PO within each of paging cycles, or the POs for the first communication device to receive the paging message are all POs in a target paging window of each of the paging cycles, or the POs for the first communication device to receive the paging message are all preconfigured POs.

8. The method according to any one of claims 1 to 6, wherein
receiving, by the first communication device, the paging message comprises:

   receiving, by the first communication device, the paging message in a target manner;
   wherein the target manner is one of a plurality of manners, and the plurality of manners comprise at least two of: a first manner, a second manner, or a third manner;
   wherein in the first manner, each of POs for the first communication device to receive the paging message is a target PO within each of paging cycles; in the second manner, the POs for the first communication device to receive the paging message are all POs in a target paging window of each of the paging cycles; in the third manner, the POs for the first communication device to receive the paging message are all preconfigured POs.

9. The method according to claim 8, wherein the target manner is preconfigured by a network device.

10. The method according to any one of claims 7 to 9, wherein

   the target PO is determined based on at least one of: identity information of the first communication device, type information of the first communication device, or service type information executed by the first communication device; and/or
   the target paging window is determined based on at least one of: the identity information of the first communication device, the type information of the first communication device, or the service type information executed by the first communication device.

11. The method according to any one of claims 7 to 10, wherein POs within a same paging cycle are continuous in time domain or discontinuous in time domain.

12. The method according to any one of claims 7 to 11, wherein
a starting position of each of the paging cycles is determined based on a radio frame number and/or a slot number, or based on a time-domain position of a first target signal.

13. The method according to claim 12, wherein
the first target signal is one of: a beacon signal, an SS, or a broadcast signal.

14. The method according to any one of claims 7 to 9, wherein
a starting position of each of the preconfigured POs is determined based on a radio frame number and/or a slot number, or based on a time-domain position of a second target signal.

15. The method according to claim 14, wherein
the second target signal is one of: a beacon signal, an SS, or a broadcast signal.

16. The method according to any one of claims 1 to 15, wherein

   a payload of the paging message comprises at least one of: identity information or access resource configuration;
   wherein the identity information indicates a target of the paging message, and the access resource configuration indicates resource configuration information for network access after reception of the paging message.

17. The method according to claim 16, wherein

   in a case where the payload of the paging message comprises the identity information, the identity information is an identifier (ID) of the first communication device, or a portion of the ID of the first communication device, or IDs of a plurality of communication devices, or a group ID;

wherein the plurality of communication devices comprise the first communication device, and the first communication device belongs to a group identified by the group ID.

18. The method according to claim 17, wherein
in a case where the identity information is the IDs of the plurality of communication devices, the IDs of the plurality of communication devices are carried in a first information field of the paging message in a first order.

19. The method according to claim 18, wherein the first order is determined by a protocol, or configured by a network device.

20. The method according to claim 17, wherein
in a case where the identity information is the group ID, the group ID is determined based on the ID of the first communication device, or based on a service type executed by the first communication device, or is preconfigured for the first communication device, or is determined based on a target information field in the ID of the first communication device.

21. The method according to claim 20, wherein

in a case where the group ID is determined based on the ID of the first communication device, the group ID is determined by the following formulas:

$$Group\ ID = device\ ID\ mod\ N;$$

or

$$Group\ ID = (device\ ID\ mod\ M)\ mod\ N;$$

wherein *Group ID* denotes the group ID, *device ID* denotes the ID of the first communication device, *N* denotes a number of groups, *M* and *N* are positive integers, and *mod* denotes a modulo operation.

22. The method according to claim 21, wherein *M* represents a number of POs within each paging cycle.

23. The method according to claim 20, wherein
in a case where the group ID is determined based on the service type executed by the first communication device, different service types correspond to different groups, and a correspondence between service types and group IDs is preconfigured by a network device or determined by a protocol.

24. The method according to claim 20, wherein
in a case where the group ID is preconfigured for the first communication device, the group ID is factory-preconfigured for the first communication device, or is configured by a network when the first communication device accesses the network.

25. The method according to claim 20, wherein
in a case where the group ID is determined based on the target information field in the ID of the first communication device, different information fields in the ID of the first communication device correspond to different groups, and a correspondence between information fields for the first communication device and group IDs is preconfigured by a network device or determined by a protocol.

26. The method according to claim 16, wherein
in a case where the payload of the paging message does not comprise the identity information, or the identity information in the payload of the paging message is a target value, all communication devices that receive the paging message are paged.

27. The method according to claim 16, wherein
in a case where the paging message comprises the access resource configuration, the resource configuration information comprises at least one of: frequency-domain information of an access resource, time-domain information of the access resource, periodicity information of the access resource, or access control information.

28. The method according to any of claims 1 to 27, wherein
a modulation waveform for the paging message is an ASK waveform, or an on-off keying (OOK) waveform, or a frequency shift keying (FSK) waveform, or a phase shift keying (PSK) waveform.

29. The method according to any of claims 1 to 28, wherein
the first communication device is an ambient internet of things (IoT) device or a zero-power device.

30. A method for wireless communication, comprising:
sending, by a second communication device, a paging message for a first communication device.

31. The method according to claim 30, wherein

the paging message is carried via a paging channel;
wherein a transmission parameter for the paging channel is determined by a protocol, or configured via a control channel associated with the paging channel, or configured via a broadcast message.

32. The method according to claim 30 or claim 31, further comprising:

sending, by the second communication device, a control channel and/or a synchronization signal (SS);
wherein the control channel is used to configure a transmission parameter for a paging channel carrying the paging message, and the SS is used by the first communication device for clock synchronization.

33. The method according to claim 32, wherein

a modulation waveform for the control channel is an amplitude shift keying (ASK) waveform, or the control channel is received via envelope detection; and/or
a modulation waveform for the SS is an ASK waveform, or the SS is received via envelope detection.

34. The method according to claim 32 or claim 33, wherein
a coding scheme for the control channel is determined by a protocol; and/or, a sequence of the SS is determined by a protocol.

35. The method according to any one of claims 31 to 34, wherein
the transmission parameter for the paging channel comprises at least one of: a coding scheme for the paging channel, a transmission duration of the paging channel, or a coding rate for the paging channel.

36. The method according to any of claims 30 to 35, wherein
each of paging occasions (POs) for the first communication device to receive the paging message is a target PO within each of paging cycles, or the POs for the first communication device to receive the paging message are all POs in a target paging window of each of the paging cycles, or the POs for the first communication device to receive the paging message are all preconfigured POs.

37. The method according to any one of claims 30 to 35, wherein

the paging message is received by the first communication device in a target manner;
wherein the target manner is one of a plurality of manners, and the plurality of manners comprise at least two of: a first manner, a second manner, or a third manner;
wherein in the first manner, each of POs for the first communication device to receive the paging message is a target PO within each of paging cycles; in the second manner, the POs for the first communication device to receive the paging message are all POs in a target paging window of each of the paging cycles; in the third manner, the POs for the first communication device to receive the paging message are all preconfigured POs.

38. The method according to claim 37, wherein the target manner is preconfigured by a network device, or the target manner is preconfigured by the second communication device.

39. The method according to any one of claims 36 to 38, wherein

the target PO is determined based on at least one of: identity information of the first communication device, type information of the first communication device, or service type information executed by the first communication device; and/or

the target paging window is determined based on at least one of: the identity information of the first communication device, the type information of the first communication device, or the service type information executed by the first communication device.

40. The method according to any one of claims 36 to 39, wherein POs within a same paging cycle are continuous in time domain or discontinuous in time domain.

41. The method according to any one of claims 36 to 40, wherein

a starting position of each of the paging cycles is determined based on a radio frame number and/or a slot number, or based on a time-domain position of a first target signal.

42. The method according to claim 41, wherein

the first target signal is one of: a beacon signal, an SS, or a broadcast signal.

43. The method according to any one of claims 36 to 38, wherein

a starting position of each of the preconfigured POs is determined based on a radio frame number and/or a slot number, or based on a time-domain position of a second target signal.

44. The method according to claim 43, wherein

the second target signal is one of: a beacon signal, an SS, or a broadcast signal.

45. The method according to any one of claims 30 to 44, wherein

a payload of the paging message comprises at least one of: identity information or access resource configuration; wherein the identity information indicates a target of the paging message, and the access resource configuration indicates resource configuration information for network access after reception of the paging message.

46. The method according to claim 45, wherein

in a case where the payload of the paging message comprises the identity information, the identity information is an identifier (ID) of the first communication device, or a portion of the ID of the first communication device, or IDs of a plurality of communication devices, or a group ID; wherein the plurality of communication devices comprise the first communication device, and the first communication device belongs to a group identified by the group ID.

47. The method according to claim 46, wherein

in a case where the identity information is the IDs of the plurality of communication devices, the IDs of the plurality of communication devices are carried in a first information field of the paging message in a first order.

48. The method according to claim 47, wherein the first order is determined by a protocol, or configured by a network device.

49. The method according to claim 46, wherein

in a case where the identity information is the group ID, the group ID is determined based on the ID of the first communication device, or based on a service type executed by the first communication device, or is preconfigured for the first communication device, or is determined based on a target information field in the ID of the first communication device.

50. The method according to claim 49, wherein

in a case where the group ID is determined based on the ID of the first communication device, the group ID is determined by the following formulas:

$$Group\ ID = device\ ID\ mod\ N;$$

or

$$Group\ ID = (device\ ID\ mod\ M)\ mod\ N;$$

wherein *Group ID* denotes the group ID, *device ID* denotes the ID of the first communication device, *N* denotes a number of groups, *M* and *N* are positive integers, and *mod* denotes a modulo operation.

51. The method according to claim 50, wherein *M* represents a number of POs within each paging cycle.

52. The method according to claim 49, wherein
in a case where the group ID is determined based on the service type executed by the first communication device, different service types correspond to different groups, and a correspondence between service types and group IDs is preconfigured by a network device or determined by a protocol.

53. The method according to claim 49, wherein
in a case where the group ID is preconfigured for the first communication device, the group ID is factory-preconfigured for the first communication device, or is configured by a network when the first communication device accesses the network.

54. The method according to claim 49, wherein
in a case where the group ID is determined based on the target information field in the ID of the first communication device, different information fields in the ID of the first communication device correspond to different groups, and a correspondence between information fields for the first communication device and group IDs is preconfigured by a network device or determined by a protocol.

55. The method according to claim 45, wherein
in a case where the payload of the paging message does not comprise the identity information, or the identity information in the payload of the paging message is a target value, all communication devices that receive the paging message are paged.

56. The method according to claim 45, wherein
in a case where the paging message comprises the access resource configuration, the resource configuration information comprises at least one of: frequency-domain information of an access resource, time-domain information of the access resource, periodicity information of the access resource, or access control information.

57. The method according to any of claims 30 to 56, wherein
a modulation waveform for the paging message is an ASK waveform, or an on-off keying (OOK) waveform, or a frequency shift keying (FSK) waveform, or a phase shift keying (PSK) waveform.

58. The method according to any of claims 30 to 57, wherein

the first communication device is an ambient internet of things (IoT) device or a zero-power device; and/or
the second communication device is a network device, or an access point (AP), or a station (STA), or a terminal device, or a relay device.

59. A communication device, the communication device being a first communication device and comprising:
a communication unit configured to receive a paging message.

60. A communication device, the communication device being a second communication device and comprising:
a communication unit configured to send a paging message for the first communication device.

61. A communication device, wherein the communication device is a first communication device, and the communication device comprises a processor and a memory, wherein the memory is configured to store a computer program, and the processor is used to invoke and execute the computer program stored in the memory, so that the communication device performs the method according to any one of claims 1 to 29.

62. A communication device, wherein the communication device is a second communication device, and the communication device comprises a processor and a memory, wherein the memory is configured to store a computer program, and the processor is used to invoke and execute the computer program stored in the memory, so that the communication device performs the method according to any one of claims 30 to 58.

63. A chip, comprising a processor configured to invoke and execute a computer program from a memory, so that a device equipped with the chip performs the method according to any one of claims 1 to 29.

64. A chip, comprising a processor configured to invoke and execute a computer program from a memory, so that a device equipped with the chip performs the method according to any one of claims 30 to 58.

65. A computer-readable storage medium, configured to store a computer program, wherein when the computer program is executed, the method according to any one of claims 1 to 29 is implemented.

66. A computer-readable storage medium, configured to store a computer program, wherein when the computer program is executed, the method according to any one of claims 30 to 58 is implemented.

67. A computer program product, comprising computer program instructions, wherein when the computer program instructions are executed, the method according to any one of claims 1 to 29 is implemented.

68. A computer program product, comprising computer program instructions, wherein when the computer program instructions are executed, the method according to any one of claims 30 to 58 is implemented.

69. A computer program, wherein when the computer program is executed, the method according to any one of claims 1 to 29 is implemented.

70. A computer program, wherein when the computer program is executed, the method according to any one of claims 30 to 58 is implemented.

**100**

110

120    120

FIG. 1

Sensor module

Low-power computing module

Backscattering communication module

Energy harvesting module

Zero-power terminal

Power supply/trigger

Backscattering communication

Network device

FIG. 2

29

FIG. 3

FIG. 4

FIG. 5

1 0 1 1 0 0 1 0 1 0 1 0 0 1 0 1 1

FIG. 6

1 0 1 1 0 0 1 0 1 0 0 1 0 1 1

FIG. 7

1 0 1 1 0 0 1 0 1 0 0 1 0 1 1

FIG. 8

1 0 1 1 0 0 1 0 1 0 0 1 0 1 1

FIG. 9

1 0 1 1 0 0 1 0 1 0 0 1 0 1 1

FIG. 10

**200**

| FIRST COMMUNICATION DEVICE | | SECOND COMMUNICATION DEVICE |

S210, SECOND COMMUNICATION DEVICE SENDS PAGING MESSAGE FOR FIRST COMMUNICATION DEVICE

S220, FIRST COMMUNICATION DEVICE RECEIVE PAGING MESSAGE

FIG. 11

| SS | Control channel | Paging channel |
|----|-----------------|----------------|

FIG. 12

Periodical PO

Paging cycle

☐ Target PO

FIG. 13

Periodical paging window

Paging cycle

☐ Target paging window

FIG. 14

☐ PO

FIG. 15

FIG. 16

| Country code | province/ city code | district/ county code | industry major code | industry subcategory code | enterprise code | Device code |
|---|---|---|---|---|---|---|
| | | | | | | |

FIG. 17

COMMUNICATION
DEVICE 300

COMMUNICATION
UNIT 310

FIG. 18

COMMUNICATION
DEVICE 400

COMMUNICATION
UNIT 410

FIG. 19

COMMUNICATION
DEVICE 500

MEMORY
520

PROCESSOR
510

TRANSCEIVER
530

FIG. 20

FIG. 21

FIG. 22

## INTERNATIONAL SEARCH REPORT

| | International application No. |
|---|---|
| | **PCT/CN2023/074935** |

### A.  CLASSIFICATION OF SUBJECT MATTER

H04W68/02(2009.01)i;  H04W52/02(2009.01)i

According to International Patent Classification (IPC) or to both national classification and IPC

### B.  FIELDS SEARCHED

Minimum documentation searched (classification system followed by classification symbols)

IPC:H04W68/-,H04W52/-

Documentation searched other than minimum documentation to the extent that such documents are included in the fields searched

Electronic data base consulted during the international search (name of data base and, where practicable, search terms used)

CNTXT, ENTXTC, WPABSC: 物联网, 寻呼, 报文, 数据包, 负载, 消息, 载荷, 配置, 频域, 时机, 时域, 周期: VEN, ENTXT, WPABS: Internet of Things, IOT, paging, packet, load, message, configuration, frequency, time, period

### C.  DOCUMENTS CONSIDERED TO BE RELEVANT

| Category* | Citation of document, with indication, where appropriate, of the relevant passages | Relevant to claim No. |
|---|---|---|
| X | WO 2022021006 A1 (GUANGDONG OPPO MOBILE TELECOMMUNICATIONS CORP., LTD.) 03 February 2022 (2022-02-03) description, page 4, lines 44 and 50-51, page 5, lines 12-13, page 6, lines 15-51, and page 8, lines 12-34 | 1-15, 28-44, 57-70 |
| Y | WO 2022021006 A1 (GUANGDONG OPPO MOBILE TELECOMMUNICATIONS CORP., LTD.) 03 February 2022 (2022-02-03) description, page 4, lines 44 and 50-51, page 5, lines 12-13, page 6, lines 15-51, and page 8, lines 12-34 | 16-27, 45-56 |
| Y | CN 112205041 B (HUAWEI TECHNOLOGIES CO., LTD.) 09 August 2022 (2022-08-09) description, paragraphs 316-318, 365, and 372 | 16-27, 45-56 |
| A | CN 110291812 A (SAMSUNG ELECTRONICS CO., LTD.) 27 September 2019 (2019-09-27) entire document | 1-70 |
| A | CN 114938538 A (HUAWEI TECHNOLOGIES CO., LTD.) 23 August 2022 (2022-08-23) entire document | 1-70 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2023** | **30 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/074935** |

| C. | DOCUMENTS CONSIDERED TO BE RELEVANT | |
|---|---|---|
| Category* | Citation of document, with indication, where appropriate, of the relevant passages | Relevant to claim No. |
| A | US 2017142560 A1 (LG ELECTRONICS INC.) 18 May 2017 (2017-05-18)<br>entire document | 1-70 |

Form PCT/ISA/210 (second sheet) (July 2022)

## INTERNATIONAL SEARCH REPORT
### Information on patent family members

International application No.

**PCT/CN2023/074935**

| Patent document cited in search report | | | Publication date (day/month/year) | Patent family member(s) | | | Publication date (day/month/year) |
|---|---|---|---|---|---|---|---|
| WO | 2022021006 | A1 | 03 February 2022 | US | 2023199716 | A1 | 22 June 2023 |
| | | | | EP | 4192122 | A1 | 07 June 2023 |
| | | | | EP | 4192122 | A4 | 27 September 2023 |
| | | | | CN | 115669085 | A | 31 January 2023 |
| CN | 112205041 | B | 09 August 2022 | CN | 112205041 | A | 08 January 2021 |
| | | | | WO | 2019232732 | A1 | 12 December 2019 |
| | | | | EP | 3806557 | A1 | 14 April 2021 |
| | | | | EP | 3806557 | A4 | 30 June 2021 |
| CN | 110291812 | A | 27 September 2019 | US | 2020221418 | A1 | 09 July 2020 |
| | | | | US | 10798676 | B2 | 06 October 2020 |
| | | | | US | 2021022109 | A1 | 21 January 2021 |
| | | | | US | 11166258 | B2 | 02 November 2021 |
| | | | | KR | 20180092787 | A | 20 August 2018 |
| | | | | US | 2020092842 | A1 | 19 March 2020 |
| | | | | US | 10638448 | B2 | 28 April 2020 |
| | | | | US | 2019289570 | A1 | 19 September 2019 |
| | | | | US | 10645669 | B2 | 05 May 2020 |
| | | | | EP | 3361820 | A1 | 15 August 2018 |
| | | | | US | 2018234941 | A1 | 16 August 2018 |
| | | | | WO | 2018147677 | A1 | 16 August 2018 |
| | | | | US | 10314005 | B2 | 04 June 2019 |
| | | | | IN | 201937032087 | A | 11 October 2019 |
| | | | | VN | 66636 | A | 25 October 2019 |
| | | | | EP | 3361820 | B1 | 28 October 2020 |
| | | | | US | 11134467 | B2 | 28 September 2021 |
| | | | | CN | 110291812 | B | 15 April 2022 |
| | | | | CN | 114745780 | A | 12 July 2022 |
| CN | 114938538 | A | 23 August 2022 | WO | 2018201499 | A1 | 08 November 2018 |
| | | | | CN | 110574456 | A | 13 December 2019 |
| | | | | KR | 20200003084 | A | 08 January 2020 |
| | | | | IN | 201937045840 | A | 10 January 2020 |
| | | | | EP | 3611977 | A1 | 19 February 2020 |
| | | | | EP | 3611977 | A4 | 13 May 2020 |
| | | | | JP | 2020520149 | W | 02 July 2020 |
| | | | | US | 2021160814 | A1 | 27 May 2021 |
| | | | | KR | 102303572 | B1 | 16 September 2021 |
| | | | | JP | 6941188 | B2 | 29 September 2021 |
| | | | | US | 11218988 | B2 | 04 January 2022 |
| | | | | CN | 110574456 | B | 05 April 2022 |
| | | | | EP | 3611977 | B1 | 11 May 2022 |
| | | | | US | 2022159613 | A1 | 19 May 2022 |
| | | | | EP | 4009726 | A1 | 08 June 2022 |
| | | | | CN | 114945212 | A | 26 August 2022 |
| US | 2017142560 | A1 | 18 May 2017 | WO | 2016003174 | A1 | 07 January 2016 |
| | | | | US | 10440524 | B2 | 08 October 2019 |

Form PCT/ISA/210 (patent family annex) (July 2022)